# FASCICULE DE BREVET EUROPEEN

(11) **EP 1 551 892 B1**
(45) Date de publication et mention de la délivrance du brevet: **16.08.2006**
(21) Numéro de dépôt: 03756503.3
(22) Date de dépôt: 23.07.2003
(51) Int. Cl.: C08G 14/06, C08J 5/24

(54) **SOLUTION AQUEUSE DE RESINE COMPOSE PHENOLIQUE-FORMALDEHYDE-AMINOALCOOL, PROCEDE DE PREPARATION, COMPOSITION D ENCOLLAGE DE FI BRES MINERALES RENFERMANT LADITE RESINE ET PRODUITS RESULTANTS**
WÄSSRIGE LÖSUNG EINES PHENOLFORMALDEHYDAMINOALKOHOLHARZES, VERFAHREN ZU IHRER HERSTELLUNG, LEIMUNGSZUSAMMENSETZUNG FÜR MINERALFASER
AQUEOUS SOLUTION OF PHENOLIC COMPOUND-FORMALDEHYDE-AMINOALCOHOL RESIN, PREPARATION METHOD, MINERAL FIBER SIZING COMPOSITIONS CONTAINING SAID RESIN AND RESULTING PRODUCTS

(30) Priorité: 25.07.2002 FR 0209727
(43) Date de publication de la demande: 13.07.2005
(73) Titulaire: SAINT-GOBAIN ISOVER, 92400 Courbevoie (FR)
(72) Inventeur: TETART, Serge, F-60740 Saint-Maximin (FR)
(74) Mandataire: Muller, René
(86) Numéro de dépôt international: PCT/FR2003/002326
(87) Numéro de publication internationale: WO 2004/011519

(56) Documents cités:
- EP-A- 1 081 209
- US-A- 3 876 405
- US-A- 4 146 512
- US-A- 4 282 330
- US-B1- 6 395 819

## Description

La présente invention se rapporte au domaine des résines à utiliser pour la préparation de compositions d'encollage pour fibres minérales. Plus spécifiquement, elle a trait à la préparation d'une résine formée par condensation d'un composé phénolique, de formaldéhyde et d'un aminoalcool, aux encollages aqueux comprenant une telle résine et aux produits à base de fibres minérales formés au moyen de ces encollages.

Les résines phénoliques font partie des résines thermodurcissables capables de former un réseau tridimensionnel et, à ce titre, elles sont souvent utilisées en tant que constituants de base des compositions d'encollage de fibres minérales, lesquelles fibres permettent de fabriquer des isolants thermiques et acoustiques, des voiles de fibres de verre ainsi que des substrats de culture hors-sol.

La composition d'encollage est appliquée sur des fibres qui peuvent être obtenues par différents procédés, par exemple selon la technique connue du fibrage centrifuge interne ou externe. La centrifugation interne consiste à introduire la matière en fusion (en général du verre ou une roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés par un courant gazeux ayant une température et une vitesse élevées, vers un organe récepteur pour former une nappe de fibres.

Pour assurer l'assemblage des fibres entre elles, on projette sur les fibres à la sortie du dispositif centrifuge la composition d'encollage contenant la résine thermodurcissable. La nappe de fibres revêtues de l'encollage est soumise à un traitement thermique (à une température supérieure à 100°C) afin d'effectuer la polycondensation de la résirie et obtenir ainsi un produit durci ayant les propriétés requises pour former un produit d'isolation thermique et/ou phonique, notamment une stabilité dimensionnelle, une résistance à la traction, une reprise d'épaisseur après compression et une couleur homogène.

La composition d'encollage destinée à être pulvérisée sur les fibres est constituée de la résine qui se présente généralement sous la forme d'une solution aqueuse à laquelle on ajoute un catalyseur et éventuellement des additifs jouant un rôle particulier (lubrification, réduction des poussières, régulation de viscosité, ...).

Parmi les résines phénoliques, celles qui appartiennent à la famille des résols sont particulièrement recherchées car, en plus d'être aptes à réticuler sous l'action de la chaleur, elles sont très solubles dans l'eau; possèdent une bonne affinité pour les fibres minérales, en particulier en verre, et sont relativement peu coûteuses.

Les propriétés recherchées pour la composition d'encollage dépendent essentiellement des caractéristiques de la résine. Du point de vue de l'application, une composition d'encollage doit avoir une bonne aptitude à la pulvérisation, pouvoir se déposer à la surface des fibres et les lier entre elles. L'aptitude à la pulvérisation est directement liée à la capacité que possède la résine à pouvoir être diluée dans une grande quantité d'eau. On caractérise cette aptitude à la dilution par la « diluabilité » que l'on définit comme étant le volume d'eau déionisée qu'il est possible, à une température donnée, d'ajouter à une unité de volume de la solution aqueuse de résine avant l'apparition d'un trouble permanent. On considère généralement qu'une résine est apte à être utilisée en tant qu'encollage lorsque sa diluabilité est égale ou supérieure à 1000 %, à 20°C, pendant au moins 8 jours, ou mieux encore égale ou supérieure à 2000 % (diluabilité infinie).

De plus en plus, on cherche à obtenir des compositions qui satisfont également à des exigences environnementales et toxicologiques, c'est-à-dire des compositions qui contiennent ou génèrent le moins possible de gaz indésirables ou de produits pouvant affecter la santé humaine.

A cet égard, les résines phénoliques de type résol ne donnent pas entière satisfaction. Elles sont obtenues par condensation, en milieu basique, de phénol et de formaldéhyde en excès, et par conséquent la teneur résiduelle en produits de départ, notamment en formaldéhyde, est généralement élevée.

Pour maintenir cette teneur dans des limites acceptables, il est connu d'ajouter dans la résine une quantité suffisante d'urée qui réagit avec le formaldéhyde libre en formant des condensats d'urée-formaldéhyde (voir EP-A-0 148 050). On obtient ainsi une résine renfermant des condensats de phénol-formaldéhyde et d'urée-formaldéhyde ayant une teneur en formaldéhyde libre de 3 % environ et un taux de phénol libre peu élevé, suffisamment bas pour que la résine soit qualifiée comme ne générant pas d'émissions gazeuses portant atteinte à l'environnement. Toutefois, il reste dans la résine un excès d'urée qui se transforme en ammoniac dans la phase de traitement ultérieur visant à effectuer la polycondensation, contribuant de ce fait à augmenter la quantité de gaz indésirables dans les effluents. En outre, les condensats urée-formaldéhyde sont peu stables thermiquement et sont dégradés en formaldéhyde et en urée lors de cette même étape de polycondensation. Un autre inconvénient est que les condensats urée-formaldéhyde sont peu solubles dans l'eau, ce qui nécessite de conserver la résine à une température basse (de l'ordre de 14-16°C) afin d'éviter qu'ils ne cristallisent et forment des dépôts risquant d'obstruer les canalisations de transfert et les buses de pulvérisation de l'encollage.

Dans EP-A-0 480 778, il a été proposé de réduire la teneur en phénol et en formaldéhyde libres en substituant l'urée par une amine qui réagit avec le phénol et le formaldéhyde résiduels selon la réaction de Mannich pour former un produit de condensation dont la stabilité thermique se trouve améliorée. La teneur en formaldéhyde libre de cette résine est inférieure à 0,5%.

Les résines qui viennent d'être décrites sont toutes obtenues en faisant d'abord réagir le phénol et le formaldéhyde pour former des condensats phénol-formaldéhyde, puis dans une étape suivante, en condensant le formaldéhyde et le cas échéant le phénol n'ayant pas réagi avec l'urée ou l'amine. Par conséquent, la résine est constituée, pour l'essentiel, de condensats phénol-formaldéhyde contenant des groupes méthylols. Comme déjà indiqué, les fibres revêtues de l'encollage sont portées à une température supérieure à 100°C afin d'effectuer la réticulation. Sous l'effet de la température, les groupes méthylols de la résine réagissent ensemble ou avec le phénol résiduel pour former des ponts méthylènes, ou sont dégradés, ce qui dans tous les cas se traduit par la libération de formaldéhyde et donc par une augmentation des gaz indésirables.

La présente invention a pour objet une nouvelle résine qui présente des caractéristiques satisfaisantes pour pouvoir être utilisée dans une composition d'encollage pulvérisable et qui a une faible capacité à produire des émissions gazeuses indésirables, notamment au regard du formaldéhyde, à savoir que la résine possède une faible teneur en formaldéhyde libre et qu'en outre elle ne permet pas qu'il en soit libéré lors du traitement des fibres visant à réticuler l'encollage qui les revêt.

Un autre objet de l'invention est un procédé de fabrication de la résine à partir d'un composé phénolique, de formaldéhyde et d'un aminoalcool qui ne nécessite pas d'utiliser de l'urée ou une amine pour diminuer la teneur en formaldéhyde libre.

L'invention a aussi pour objet une composition d'encollage comprenant ladite résine, son utilisation pour encoller des fibres minérales en vue de former des produits d'isolation thermique et/ou phonique et les produits ainsi obtenus.

La résine liquide selon l'invention destinée à être utilisée dans une composition d'encollage pour fibres minérales, contient essentiellement des condensats de composé phénolique-formaldéhyde-aminoalcool. Celle-ci présente un taux de formaldéhyde libre de préférence inférieur à 0,4 % du poids total de la résine. Elle possède une diluabilité, mesurée à 20°C, au moins égale à 1000 % et contient par ailleurs une teneur en phénol libre inférieure 0,02 % du poids total de la résine. La résine est en outre stable thermiquement, c'est-à-dire qu'elle est pratiquement exempte de groupes méthylols susceptibles de générer du formaldéhyde dans les conditions de réticulation appliquées aux fibres revêtues de la composition d'encollage.

Pour évaluer la stabilité thermique, la composition d'encollage contenant la résine est soumise à un test simulant les conditions thermiques imposées pour la fabrication d'un produit d'isolation tel que décrit précédemment. On considère que la résine est stable thermiquement et peu apte à libérer des gaz indésirables si la quantité de formaldéhyde libéré est inférieure ou égale à 5 g pour 1 kg de matière sèche d'une solution d'encollage à 26,6 % en poids dans l'eau.

Selon l'invention, la résine est formée par réaction de Mannich qui procède par condensation d'un composé phénolique, de formaldéhyde et d'un aminoalcool.

Le composé phénolique peut être par exemple le phénol, un crésol tel que l'o-crésol, le m-crésol ou le p-crésol, le résorcinol et les mélanges de ces composés. On préfère le phénol.

L'aminoalcool conforme à l'invention est choisi parmi les composés répondant à la formule suivante : 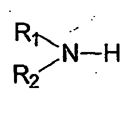 dans laquelle R₁ et R₂, identiques ou différents, représentent H, une chaîne hydrocarbonée linéaire ou ramifiée en C₁-C₁₀, de préférence en C₂-C₅, pouvant renfermer une ou plusieurs insaturations et un ou plusieurs radicaux OH, l'un au moins de R₁ ou R₂ renfermant au moins un radical OH.

De préférence, le radical OH est porté par l'atome de carbone terminal de la chaîne hydrocarbonée et de préférence chaque radical R₁ et R₂ porte une fonction hydroxyle sur le carbone terminal de la chaîne hydrocarbonée. Avantageusement, le nombre total de radicaux OH n'excède pas 8.

A titre d'exemples de tels aminoalcools, on peut citer la monoéthanolamine et la diéthanolamine. On préfère la monoéthanolamine.

Pour obtenir la résine telle que définie ci-dessus, l'invention propose un procédé qui consiste à faire réagir le composé phénolique simultanément avec le formaldéhyde et l'aminoalcool dans un rapport molaire formaldéhyde/composé phénolique supérieur à 1, et refroidir le mélange réactionnel. L'invention se caractérise en ce que le formaldéhyde et l'aminoalcool sont mis à réagir simultanément avec le composé phénolique, et avantageusement de manière progressive ce qui permet un meilleur contrôle du dégagement de chaleur lié au caractère exothermique de la réaction de condensation.

Plus particulièrement, on fait réagir le formaldéhyde, l'aminoalcool et le composé phénolique dans un rapport molaire formaldéhyde/composé phénolique et aminoalcool/composé phénolique compris entre 2 et 3, de préférence égal à environ 3, jusqu'à l'obtention d'un taux de conversion du composé phénolique d'au moins 99 %. Le taux de conversion du composé phénolique est le pourcentage de composé phénolique ayant participé à la réaction de condensation composé phénolique-formaldéhyde-aminoalcool par rapport à 100 % du composé phénolique initial.

La réaction de condensation est ensuite stoppée, par refroidissement du mélange réactionnel, à un stade qui correspond à une résine ayant une diluablilité supérieure à 1000 %, et en règle générale supérieure à 2000 %.

Selon l'invention, l'ajout du formaldéhyde et de l'aminoalcool se fait simultanément et avantageusement progressivement dans le composé phénolique. Le formaldéhyde et l'aminoalcool sont de préférence introduits séparément, mais il est également possible de les ajouter en mélange. Dans ce cas, il est recommandé d'opérer à une température relativement basse pour éviter que les composés puissent réagir entre eux avant d'entrer en contact avec le composé phénolique.

La réaction selon l'invention entre le composé phénolique, l'aldéhyde et l'aminoalcool s'effectue de manière quasi-stoechiométrique ce qui permet d'atteindre des teneurs en formaldéhyde et en phénol résiduels particulièrement basses. Par conséquent, il n'est donc plus nécessaire de piéger l'excès de composé phénolique et/ou de formaldéhyde avec de l'urée ou d'une amine.

Quel que soit le rapport molaire formaldéhyde/composé phénolique utilisé, la résine a une teneur en formaldéhyde libre qui demeure inférieure à 0,4 %, de préférence inférieure à 0,25 % et une teneur en phénol libre inférieure à 0,02 %, de préférence inférieure à 0,01 % par rapport à la résine liquide. Ceci est rendu possible par le fait que l'introduction du formaldéhyde et de l'aminoalcool se fait progressivement, permettant ainsi d'avoir un taux de conversion en composé phénolique particulièrement élevé, et de réduire d'autant la quantité de composé phénolique libre dans la résine finale.

La réaction de condensation ne requiert pas de catalyseur, ce qui est un avantage conséquent par rapport aux résols classiques nécessitant l'ajout d'une base, et cette base devant ensuite être neutralisée par un acide en fin de réaction pour éviter que la résine évolue dans le temps. Les sels formés, notamment lorsqu'ils contiennent du Na, sont connus pour diminuer la résistance au vieillissement des produits formés de fibres encollées avec ce type de résine. Dans l'invention, du fait qu'il n'est pas nécessaire d'utiliser un catalyseur inorganique, la résine présente un taux de cendres très faible, généralement inférieur à 0,04 % en poids par rapport à la résine sèche ou inférieur à 0,02 % par rapport à la résine liquide.

Plus particulièrement, la préparation de la résine a lieu selon un cycle de température qui se divise schématiquement en trois phases : une phase de chauffage, une phase comportant un palier de température et une phase de refroidissement.

Dans la première étape, on fait réagir le composé phénolique simultanément avec le formaldéhyde et l'aminoalcool tout en chauffant progressivement le mélange réactionnel jusqu'à une température comprise entre 60 et 100°C, et de préférence égale à environ 75°C, les rapports molaires formaldéhyde/composé phénolique et aminoalcool/composé phénolique étant avantageusement compris entre 2 et 3, de préférence de l'ordre d'environ 3.

Lors de la deuxième phase (palier de température), la température du milieu réactionnel atteinte pendant la première phase est maintenue jusqu'à ce que l'on obtienne un taux de conversion du composé phénolique au moins égal à 99 % correspondant à une diluabilité infinie (supérieur à 2000 %). La durée de ce palier est de préférence de l'ordre de 100 à 200 minutes.

La troisième phase de refroidissement est menée de manière à ce que la température du mélange réactionnel atteigne 20 à 25°C. Dans le cas présent, la vitesse de refroidissement n'est pas critique et peut être par exemple de 1 °C par minute.

La résine obtenue est constituée essentiellement de condensats composé phénolique-formaldéhyde-aminoalcool. Par « essentiellement » il faut comprendre que les condensats composé phénolique-formaldéhyde-aminoalcool représentent au moins 70 % du poids total de la résine, calculé sur la base de la résine sèche, de préférence au moins 90 %.

L'invention a aussi pour objet une composition d'encollage destinée à revêtir des fibres minérales, notamment des fibres de verre ou de roche, ainsi que les fibres encollées obtenues, ces fibres servant plus particulièrement à fabriquer des produits d'isolation.

La composition d'encollage comprend la résine selon l'invention, un agent permettant la réticulation, et éventuellement des additifs.

La composition d'encollage selon l'invention comprend, exprimée en parties de matière sèche, de 18 à 65 parties en poids de résine et de 10 à 82 parties en poids d'agent de réticulation.

Dans le cadre de l'invention, l'agent de réticulation est un composé renfermant au moins deux fonctions susceptibles de réagir avec les fonctions amine ou les fonctions hydroxyle de la résine. A titre d'exemples, on peut citer le formaldéhyde, les amines telles que l'HMTA, les acides tels que l'acide phtalique, l'acide isophtalique, l'acide téréphtalique, l'acide citrique, les poly(acides carboxyliques ou acryliques) de masse moléculaire élevée, de l'ordre de 500, de préférence comprise entre 1000 et 5000, les anhydrides de ces acides et les mélanges de ces composés. De préférence, on utilise l'acide citrique et/ou un anhydride phtalique, isophtalique ou téréphtalique.

D'une manière générale, la composition d'encollage comprend les additifs suivants, pour 100 parties en poids de matière sèche de résine et d'agent de réticulation :
- 0 à 20 parties d'une huile, de préférence 6 à 15 parties,
- 0 à 2 parties d'un silane, de préférence de l'ordre de 0,4 partie.

Le rôle des divers constituants de la composition d'encollage est bien connu et n'est que brièvement rappelé ici :
- l'eau a un rôle de lubrifiant, permet d'ajuster la viscosité et, lors de la pulvérisation permet de refroidir les fibres et de limiter les phénomènes de pré-gélification,
- l'huile assure la lubrification des fibres, permet de réduire les poussières pouvant être générées au cours de la manipulation des produits finis (nappes isolantes par exemple) et améliore la sensation au toucher. L'huile est généralement choisie parmi les huiles inertes vis à vis des autres constituants, en émulsion dans l'eau ou pouvant être émulsionnées,
- le silane assure la liaison entre la fibre minérale et la résine, ce qui permet de renforcer les propriétés mécaniques, et améliore la résistance au vieillissement. Les silanes sont généralement des aminosilanes.

De manière avantageuse, le silane est un aminosilane, en particulier le γ-aminopropyltriéthoxysilane, commercialisé sous la référence Silquest® A1100 par Crompton. L'huile est quant à elle constituée d'hydrocarbures extraits du pétrole, essentiellement des alcanes, comme l'huile Mulrex® 88 commercialisé par Mobil Oil.

Les produits obtenus à partir des fibres précitées constituent également un objet de l'invention. Comme indiqué plus haut, ces produits peuvent prendre la forme d'une nappe ou d'un voile de fibres minérales et ils sont formés par nappage de fibres minérales liées entre elles par l'encollage qui, sous sa forme réticulée, est solide, infusible et insoluble dans l'eau:

Le voile de fibres minérales, notamment de fibres de verre, possède généralement un grammage compris entre 10 et 300 g/m², et de préférence, il comprend au moins 1 %, voire au moins 2 % et même plus de 4 % en poids d'encollage. Bien que pouvant être utilisé seul, le voile est plus particulièrement destiné à être disposé sur au moins une face extérieure d'une nappe isolante telle que décrite plus haut.

Ces produits sont notamment destinés à former des isolants thermiques et acoustiques, en particulier pour le bâtiment et pour les fours ménagers et des substrats de culture hors-sol.

Les exemples suivants non limitatifs permettent d'illustrer l'invention.

### EXEMPLE 1

Dans un réacteur de 2 litres équipé d'un système d'agitation, d'un condenseur, d'un thermomètre et d'entrées pour les réactifs, maintenu à 45°C, on introduit 198,1 g de phénol à 99,8 % (2,10 moles). A l'aide de 2 pompes doseuses, on introduit simultanément, en 30 minutes 127,75 g d'une solution aqueuse de formaldéhyde à 37 % (1,57 mole) et 97,03 g de monoéthanolamine à 99 % (1,57 mole). Durant cette période, la température est élevée régulièrement pour atteindre 55°C.

De nouveau, on introduit en 30 minutes la même quantité de formaldéhyde et de monoéthanolamine à l'aide des 2 pompes doseuses en élevant la température de manière régulière à 75°C.

On maintient le réacteur à cette température pendant une période de 60 minutes au cours de laquelle on ajoute par le biais des pompes doseuses 255,75 g de formaldéhyde (3,15 moles) et 194 g de monoéthanolamine (3,14 moles). Le mélange réactionnel est maintenu à cette température pendant 80 minutes supplémentaires puis on le refroidit. Lorsque la température atteint environ 25°C, on récupère la résine sous la forme d'une solution aqueuse limpide ayant une diluabilité infinie. Après 8 jours de conservation à 20°C, la solution de résine a une teneur en phénol libre inférieure à 0,01 %, une teneur en formaldéhyde libre inférieure à 0,25 %, une diluabilité, à 20°C, infinie et une teneur pondérale en solides (extrait sec) égale à 53,3 %.

On précise que les valeurs en formaldéhyde et en phénol indiquées correspondent au seuil de détection des méthodes analytiques utilisées pour doser les composés en question.

Le test d'émission de gaz indésirables mis en oeuvre pour apprécier la libération de formaldéhyde, de phénol et d'ammoniac est effectué de la manière suivante :
On prépare une composition comprenant 75 g de la résine liquide obtenue précédemment (soit 40 g de résine sèche), 60 g d'acide citrique anhydre et 241 g d'eau.
On place 3,76 g de cette composition (26,6 % d'extrait sec) dans une étuve à 180°C pendant 1 heure sous un balayage d'air (1l/min). Les vapeurs qui se dégagent sont dirigées vers 2 barboteurs en série contenant de l'eau. Le formaldéhyde, le phénol et l'ammoniaque piégés sont dosés par spectrocolorimétrie.

Pour 1 kg de matière sèche, la quantité de formaldéhyde dégagé est égale à 1,9 g, celle de phénol total est égale à 0,24 g et la quantité d'ammoniaque est égale à 0,17 g.

### EXEMPLE 2

### a) préparation de la résine

On introduit dans un réacteur 28,3 kg de phénol à 99,8 % (300, 11 moles) et on chauffe à 30-35°C. Dans un récipient approprié, on mélange 73 kg d'une solution aqueuse de formaldéhyde à 37 % (899,43 moles) et 55,45 kg de monoéthanolamine à 99 % (898,75 moles), que l'on introduit dans le réacteur en 189 minutes. Le rapport molaire formaldéhyde/phénol et monoéthanolamine/phénol est égal à 2,99.

Immédiatement après la fin de l'introduction des réactifs, on ajuste la température du mélange réactionnel à 30-35°C en 3 heures, puis on commence le refroidissement du mélange.

On récupère une résine liquide qui présente après 40 jours de conservation à 20°C une diluabilité infinie, une teneur en phénol libre inférieure à 0,01 %, une teneur en formaldéhyde libre inférieure à 0,25 % et une teneur pondérale en solides (extrait sec) égale à 50 %.

### b) Composition d'encollage

On prépare une composition d'encollage apte à revêtir des fibres minérales formées par étirage centrifuge en mélangeant les constituants suivants (en parties en poids de matière sèche) :
- 75 g de résine sous a)
- 60 g d'acide citrique anhydre
- 19 g d'huile (Mulrex® 88 ; 50 % de matière sèche)
- 15 g de silane (Silquest® A1100 ; 2 % de matière sèche)
- 934 g d'eau.

La composition d'encollage a une teneur en matière sèche égale à 10 %. Elle demeure stable pendant plusieurs jours.

### EXEMPLE 3 (COMPARATIF)

### a) préparation de la résine

Dans un réacteur équipé de la même manière, on ajoute 852,2 g d'une solution aqueuse de formaldéhyde à 37 % (10,5 moles) à 282,9 g de phénol à 99,8 % (3 moles) soit un rapport molaire phénol/formaldéhyde de 3,5. Comme dans l'exemple 1, on chauffe le mélange à environ 45°C, puis on ajoute, en 30 minutes, 33,88 g d'une solution aqueuse d'hydroxyde de sodium à 50 % (soit 0,423 mole et un rapport pondéral NaOH/phénol initial égal à 6 %). On chauffe ensuite le mélange à 70°C en 30 minutes et on maintient la température pendant 80-90 minutes, jusqu'à l'obtention d'un taux de conversion du phénol de 97,9 %. On ajoute alors, en 25 minutés, 211,7 g d'urée en grains (soit un rapport pondéral urée/phénol initial égal à 0,75) puis le mélange est progressivement refroidi jusqu'à 20°C et simultanément neutralisé jusqu'à pH 7,3 par ajout d'une solution à 15 % d'acide sulfurique

La résine se présente sous l'aspect d'une composition aqueuse limpide ayant une diluabilité à l'eau, à 20°C, infinie après 6 jours de stockage à 16°C. Le taux de phénol et de formaldéhyde libres est respectivement égal à 0,45 % et 0,3 %.

La résine est soumise au test d'émission de gaz indésirables décrit dans l'exemple 1. Pour cela, on prépare une composition comprenant 100 g de résine, 27 g d'urée, 0,7 g de sulfate d'ammonium et 3,6 g d'une solution aqueuse d'ammoniaque à 20 %.

Pour 1 kg de matière sèche, la quantité de formaldéhyde dégagé est égale à 2 g, celle de phénol libre est égale à 5 g et la quantité d'ammoniaque est égale à 15 g.

### b) Composition d'encollage

Comme à l'exemple 1, on prépare une composition d'encollage à 10 % en poids de matière sèche en mélangeant :
- 100 g de résine sous a)
- 27 g d'urée
- 3,5 g d'une solution aqueuse de sulfate d'ammonium à 20 %
- 3,6 g d'une solution aqueuse d'ammoniaque à 20 %
- 19 g d'huile ((Mulrex® 88 ; 50 % de matière sèche)
- 15 g de silane ((Silquest® A1100 ; 2 % de matière sèche)
- 552 g d'eau.

La composition d'encollage est stable pendant plusieurs heures.

Comparée à la composition classique à base de résine phénol-formaldéhyde de l'exemple 3, la composition d'encollage contenant la résine selon l'invention permet d'obtenir des taux de relargage en phénol et en ammoniaque nettement plus faibles, et le taux en formaldéhyde étant légèrement inférieur. La réduction de la teneur en phénol est de 95,2 % et celle de l'ammoniaque est de 98,8 % par rapport à ladite composition standard.

Lorsque la composition d'encollage selon l'exemple 2 est pulvérisée sur des fibres minérales dans des conditions conventionnelles en vue de former des nappes isolantes destinées notamment à l'isolation thermique et/ou phonique, on observe que les propriétés mécaniques, notamment la résistance en traction et la reprise d'épaisseur, sont comparables à celles obtenues avec l'encollage classique à base de résine phénol-formaldéhyde de l'exemple 3.

On précise en outre que si toutes les résines selon l'invention peuvent être utilisées dans des encollages pour produits d'isolation, on peut avec profit les utiliser pour former des substrats de culture hors-sol. Pour cette application, la plante est déposée sur le substrat imprégné d'une solution nutritive et il est nécessaire que le relargage de formaldéhyde et de phénol soit aussi faible que possible, ceux-ci étant toxiques pour la plante. La résine selon l'invention répond à ces exigences, le taux de formaldéhyde libre étant inférieur à 0,4 % et le taux de phénol restant inférieur à 0,02 % comme indiqué précedemment.

## Revendications

1. Résine liquide, notamment destinée à l'encollage de fibres minérales, présentant une diluabilité à l'eau, à 20°C, au moins égale à 1000 % ***caractérisée en ce qu*'elle** est constituée pour au moins 70 % en poids de condensats obtenus à partir d'un composé phénolique, de formaldéhyde et d'un aminoalcool selon la réaction de Mannich.

2. Résine selon la revendication 1, ***caractérisé en ce que*** le composé phénolique est le phénol, un crésol, le résorcinol ou un mélange de ces composés.

3. Résine selon la revendication 1 ou 2, ***caractérisée en ce que*** l'aminoalcool est choisi parmi les composés de formule 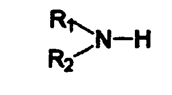 dans laquelle R₁ et R₂, identiques ou différents, représentent H, une chaîne hydrocarbonée linéaire ou ramifiée en C₁-C₁₀, de préférence C₂-C₅, pouvant renfermer une ou plusieurs insaturations et un ou plusieurs radicaux OH, l'un au moins de R₁ ou R₂ renfermant au moins un radical OH.

4. Résine selon la revendication 3, ***caractérisée en ce que*** le radical OH est porté par l'atome de carbone terminal de la chaîne hydrocarbonée et de préférence chaque radical R₁ et R₂ porte une fonction hydroxyle sur le carbone terminal de la chaîne hydrocarbonée.

5. Résine selon la revendication 4, ***caractérisée en ce que*** l'aminoalcool est monoéthanolamine ou la diéthanolamine.

6. Résine selon l'une des revendications 1 à 5, ***caractérisée en ce qu'***elle présente un taux de formaldéhyde libre inférieur à 0,4 %.

7. Résine selon l'une des revendications. 1 à 6, ***caractérisée en ce qu'***elle présente un taux de composé phénolique libre inférieur à 0,02 %.

8. Résine selon l'une des revendications 1 à 7, ***caractérisée en ce qu'***elle présente un taux de formaldéhyde libre inférieur à 0,25 %, un taux de composé phénolique inférieur à 0,01 % et une diluabilité infinie.

9. Résine selon l'une des revendications 1 à 8, ***caractérisée en ce qu*'**elle présente un taux de cendres inférieur à 0,04 % en poids de résine sèche.

10. Procédé de préparation de la résine selon l'une des revendications 1 à 9, qui consiste :
- à faire réagir un composé phénolique, du formaldéhyde et un aminoalcool selon la réaction de Mannich dans un rapport molaire formaldéhyde/composé phénolique supérieur à 1, le formaldéhyde et l'aminoalcool étant mis à réagir simultanément avec le composé phénolique,
- et à refroidir le mélange réactionnel.

11. Procédé selon la revendication 10, ***caractérisé en ce que*** le formaldéhyde et l'aminoalcool sont mis à réagir progressivement avec le phénol.

12. Procédé selon la revendication 10 ou 11, ***caractérisé en ce que*** l'on fait réagir le formaldéhyde, l'aminoalcool et le composé phénolique dans un rapport molaire formaldéhydelcomposé phénolique et aminoalcool/composé phénolique compris entre 2 et 3, de préférence égal à environ 3, jusqu'à l'obtention d'un taux de conversion du composé phénolique égal ou supérieur à 99 %.

13. Procédé selon l'une des revendications 10 à 12, ***caractérisé en ce que*** la température de réaction est comprise entre 60 et 100°C, et de préférence égale à environ 75°C.

14. Procédé selon la revendication 10, ***caractérisé en ce que*** le formaldéhyde et l'aminoalcool sont introduits séparément dans le composé phénolique.

15. Procédé selon la revendication 10, ***caractérisé en ce que*** le formaldéhyde et l'aminoalcool sont introduits dans le composé phénolique après avoir été préalablement mélangés.

16. Composition d'encollage pour fibres minérales comprenant une résine conforme à l'une des revendications 1 à 9, un agent de réticulation, et éventuellement des additifs.

17. Composition selon la revendication 16, ***caractérisée en ce qu'***elle comprend, exprimée en parties de matière sèche, de 18 à 65 parties en poids de résine et de 10 à 82 parties en poids d'agent de réticulation.

18. Composition selon la revendication 16 ou 17, ***caractérisée en ce que*** l'agent de réticulation est un composé renfermant au moins deux fonctions susceptibles de réagir avec les fonctions amine ou les fonctions hydroxyle de la résine.

19. Composition selon la revendication 18, ***caractérisée en ce que*** l'agent de réticulation est le formaldéhyde, une amine telle que l'HMTA, un acide tel que l'acide phtalique, l'acide isophtalique, l'acide téréphtalique et l'acide citrique, un poly(acide carboxylique ou acrylique) de masse moléculaire élevée, de l'ordre de 500, et de préférence comprise entre 1000 et 5000, un anhydride de ces acides ou un mélange de ces composés.

20. Fibres minérales revêtues de la composition d'encollage selon l'une des revendications 16 à 19.

21. Fibres minérales selon la revendication 20, ***caractérisées en ce qu'***elles sont constituées de verre ou d'une roche.

22. Voile de fibres minérales, notamment de fibres de verre, ***caractérisé en ce qu*'**il comprend des fibres selon la revendication 20 ou 21 et qu'il possède un grammage compris entre 10 et 300 g/m².

23. Produit d'isolation thermique et/ou phonique obtenu par nappage de fibres minérales encollées selon l'une des revendications 20 ou 21.

24. Produit selon la revendication 23, ***caractérisé en ce qu'il*** comprend en outre un voile de fibre selon la revendication 22 disposé sur au moins une des faces extérieures.

## Claims

1. Liquid resin, intended in particular for the sizing of mineral fibres, exhibiting a dilutability in water at 20°C at least equal to 1000%, ***characterized in that*** it is at least 70% by weight composed of condensates obtained from a phenolic compound, formaldehyde and an aminoalcohol according to the Mannich reaction.

2. Resin according to Claim 1, ***characterized in that*** the phenolic compound is phenol, a cresol, resorcinol or a mixture of these compounds.

3. Resin according to Claim 1 or 2, ***characterized in that*** the aminoalcohol is chosen from the compounds of formula 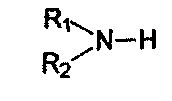 in which R₁ and R₂, which are identical or different, represent H or a linear or branched C₁-C₁₀, preferably C₂-C₅, hydrocarbon chain which can comprise one or more unsaturations and one or more OH radicals, at least one of R₁ or R₂ comprising at least one OH radical.

4. Resin according to Claim 3, ***characterized in that*** the OH radical is carried by the terminal carbon atom of the hydrocarbon chain and preferably each R₁ and R₂ radical carries a hydroxyl functional group on the terminal carbon of the hydrocarbon chain.

5. Resin according to Claim 4, ***characterized in that*** the aminoalcohol is monoethanolamine or diethanolamine.

6. Resin according to one of Claims 1 to 5, ***characterized in that*** it exhibits a level of free formaldehyde of less than 0.4%.

7. Resin according to one of Claims 1 to 6, ***characterized in that*** it exhibits a level of free phenolic compound of less than 0.02%.

8. Resin according to one of Claims 1 to 7, ***characterized in that*** it exhibits a level of free formaldehyde of less than 0.25%, a level of phenolic compound of less than 0.01% and an infinite dilutability.

9. Resin according to one of Claims 1 to 8, ***characterized in that*** it exhibits a level of ash of less than 0.04% by weight of dry resin.

10. Process for the preparation of the resin according to one of Claims 1 to 9, which consists:
- in reacting a phenolic compound, formaldehyde and an aminoalcohol according to the Mannich reaction in a formaldehyde/phenolic compound molar ratio of greater than 1, the formaldehyde and the aminoalcohol being reacted simultaneously with the phenolic compound,
- and in cooling the reaction mixture.

11. Process according to Claim 10, ***characterized in that*** the formaldehyde and the aminoalcohol are reacted gradually with the phenol.

12. Process according to Claim 10 or 11, ***characterized in that*** the formaldehyde, the aminoalcohol and the phenolic compound are reacted in a formaldehyde/phenolic compound and aminoalcohol/phenolic compound molar ratio of between 2 and 3, preferably equal to approximately 3, until a degree of conversion of the phenolic compound of equal to or greater than 99% is obtained.

13. Process according to one of Claims 10 to 12, ***characterized in that*** the reaction temperature is between 60 and 100°C and is preferably equal to approximately 75°C.

14. Process according to Claim 10, ***characterized in that*** the formaldehyde and the aminoalcohol are introduced separately into the phenolic compound.

15. Process according to Claim 10, ***characterized in that*** the formaldehyde and the aminoalcohol are introduced into the phenolic compound after having been premixed.

16. Sizing composition for mineral fibres comprising a resin in accordance with one of Claims 1 to 9, a crosslinking agent and optionally additives.

17. Composition according to Claim 16, ***characterized in that*** it comprises, expressed as parts on a dry basis, from 18 to 65 parts by weight of resin and from 10 to 82 parts by weight of crosslinking agent.

18. Composition according to Claim 16 or 17, ***characterized in that*** the crosslinking agent is a compound comprising at least two functional groups capable of reacting with the amine functional groups or the hydroxyl functional groups of the resin.

19. Composition according to Claim 18, ***characterized in that*** the crosslinking agent is formaldehyde, an amine, such as HMTA, an acid, such as phthalic acid, isophthalic acid, terephthalic acid and citric acid, a poly(carboxylic or acrylic acid) of high molecular weight, of the order of 500 and preferably between 1000 and 5000, an anhydride of these acids or a mixture of these compounds.

20. Mineral fibres coated with the sizing composition according to one of Claims 16 to 19.

21. Mineral fibres according to Claim 20, ***characterized in that*** they are formed from glass or from a rock.

22. Veil of mineral fibres, in particular of glass fibres, ***characterized in* that** it comprises fibres according to Claim 20 or 21 and **in that** it has a weight per unit area of between 10 and 300 g/m².

23. Thermal and/or sound insulation product obtained by lapping sized mineral fibres according to either of Claims 20 and 21.

24. Product according to Claim 23, ***characterized in that*** it additionally comprises a fibre veil according to Claim 22 positioned on at least one of the external faces.

## Patentansprüche

1. Flüssiges Harz, das insbesondere zum Verkleben von Mineralfasern vorgesehen ist und bei 20 °C eine Verdünnbarkeit in Wasser von wenigstens 1000 % aufweist, **dadurch gekennzeichnet, dass** es von mindestens 70 Gew.-% Kondensaten gebildet wird, die aus einer Phenolverbindung, Formaldehyd und einem Aminoalkohol gemäß der Mannich-Reaktion erhalten werden.

2. Harz nach Anspruch 1, **dadurch gekennzeichnet, dass** die Phenolverbindung Phenol, Kresol, Resorcin oder ein Gemisch aus diesen Verbindungen ist.

3. Harz nach Anspruch 1 oder 2, **dadurch gekennzeichnet, dass** der Aminoalkohol aus Verbindungen mit der Formel 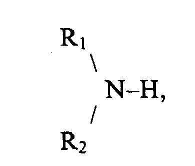 in welcher R₁ und R₂, die gegebenenfalls voneinander verschieden sind, H und eine geradkettige oder verzweigte C₁- bis C₁₀- und vorzugsweise C₂- bis C₅₋Kohlenwasserstoffkette, die eine oder mehrere Ungesättigtheiten und einen oder mehrere OH-Reste enthält, bedeuten, wobei wenigstens einer von R₁ oder R₂ mindestens einen OH-Rest enthält, ausgewählt ist.

4. Harz nach Anspruch 3, **dadurch gekennzeichnet, dass** der OH-Rest von dem terminalen Kohlenstoffatom der Kohlenwasserstoffkette getragen wird, wobei vorzugsweise jeder Rest R₁ und R₂ eine Hydroxy-Funktion am terminalen Kohlenstoffatom der Kohlenwasserstoffkette trägt.

5. Harz nach Anspruch 4, **dadurch gekennzeichnet, dass** der Aminoalkohol Monoethanolamin oder Diethanolamin ist.

6. Harz nach einem der Ansprüche 1 bis 5, **dadurch gekennzeichnet, dass** es einen freien Formaldehydanteil von unter 0,4 % aufweist.

7. Harz nach einem der Ansprüche 1 bis 6, **dadurch gekennzeichnet, dass** es einen Anteil an freier Phenolverbindung von unter 0,02 % aufweist.

8. Harz nach einem der Ansprüche 1 bis 7, **dadurch gekennzeichnet, dass** es einen freien Formaldehydanteil von unter 0,25 %, einen Anteil an der Phenolverbindung von unter 0,01 % und unendliche Verdünnbarkeit aufweist.

9. Harz nach einem der Ansprüche 1 bis 8, **dadurch gekennzeichnet, dass** es einen Aschegehalt von unter 0,04 Gew.-% des trockenen Harzes aufweist.

10. Verfahren zur Herstellung des Harzes nach einem der Ansprüche 1 bis 9, das darin besteht:
- eine Phenolverbindung, Formaldehyd und einen Aminoalkohol gemäß der Mannich-Reaktion mit einem Molverhältnis von Formaldehyd/Phenolverbindung von über 1 umzusetzen, wobei Formaldehyd und Aminoalkohol zeitgleich mit der Phenolverbindung umgesetzt werden, und
- das Reaktionsgemisch abzukühlen.

11. Verfahren nach Anspruch 10, **dadurch gekennzeichnet, dass** Formaldehyd und Aminoalkohol fortschreitend mit dem Phenol umgesetzt werden.

12. Verfahren nach Anspruch 10 oder 11, **dadurch gekennzeichnet, dass** Formaldehyd, Aminoalkohol und Phenolverbindung mit einem Molverhältnis von Formaldehyd/Phenolverbindung und Aminoalkohol/Phenolverbindung von 2 bis 3 und vorzugsweise etwa 3 umgesetzt werden, bis ein Umsatz der Phenolverbindung von 99 % oder darüber erhalten wird.

13. Verfahren nach einem der Ansprüche 10 bis 12, **dadurch gekennzeichnet, dass** die Reaktionstemperatur 60 bis 100 °C und vorzugsweise etwa 75 °C beträgt.

14. Verfahren nach Anspruch 10, **dadurch gekennzeichnet, dass** Formaldehyd und Aminoalkohol getrennt in die Phenolverbindung geleitet werden.

15. Verfahren nach Anspruch 10, **dadurch gekennzeichnet, dass** Formaldehyd und Aminoalkohol in die Phenolverbindung geleitet werden, nachdem sie zuvor miteinander vermischt worden sind.

16. Bindemittelzusammensetzung für Mineralfasern, die ein Harz nach einem der Ansprüche 1 bis 9, ein Vernetzungsmittel und gegebenenfalls Additive umfasst.

17. Zusammensetzung nach Anspruch 16, **dadurch gekennzeichnet, dass** sie, angegeben als Teile Trockensubstanz, 18 bis 65 Gew.-T1. Harz und 10 bis 82 Gew.-T1. Vernetzungsmittel umfasst.

18. Zusammensetzung nach Anspruch 16 oder 17, **dadurch gekennzeichnet, dass** das Vernetzungsmittel eine Verbindung ist, die mindestens zwei Funktionen enthält, die in der Lage sind, mit den Aminfunktionen oder Hydroxy-Funktionen des Harzes zu reagieren.

19. Zusammensetzung nach Anspruch 18, **dadurch gekennzeichnet, dass** das Vernetzungsmittel Formaldehyd, ein Amin wie HMTA, eine Säure wie Phthal-, Isophthal-, Terephthal- und Citronensäure, eine Polycarbon- bzw. Polyacrylsäure mit einem hohen Molekulargewicht von etwa 500 und vorzugsweise 1000 bis 5000, ein Anhydrid dieser Säuren oder ein Gemisch aus diesen Verbindungen ist.

20. Mineralfasern, die mit der Bindemittelzusammensetzung nach einem der Ansprüche 16 bis 19 beschichtet sind.

21. Mineralfasern nach Anspruch 20, **dadurch gekennzeichnet, dass** sie aus Glas oder Gestein gebildet sind.

22. Mineralfaservlies, insbesondere aus Glasfasern, **dadurch gekennzeichnet, dass** es Fasern nach Anspruch 20 oder 21 umfasst, **und dass** es ein Flächengewicht von 10 bis 300 g/m² besitzt.

23. Wärme- und/oder Schalldämmerzeugnis, das durch die Bildung einer Bahn aus verklebten Mineralfasern nach Anspruch 20 oder 21 erhalten ist.

24. Erzeugnis nach Anspruch 23, **dadurch gekennzeichnet, dass** es außerdem ein Faservlies nach Anspruch 22, das auf mindestens einer Außenseite aufgebracht worden ist, umfasst.
